# EUROPÄISCHE PATENTSCHRIFT

(11) **EP 1 505 350 B1**
(45) Veröffentlichungstag und Bekanntmachung des Hinweises auf die Patenterteilung: **23.12.2009**
(21) Anmeldenummer: 04017060.7
(22) Anmeldetag: 20.07.2004
(51) Int. Cl.: F24C 7/08

(54) **Verfahren und Vorrichtung zur Bedienung eines Kochsystems**
Device and method for controlling of a cooking system
Dispositif et méthode de commande d'un système de cuisson

(30) Priorität: 06.08.2003 DE 10337538
(43) Veröffentlichungstag der Anmeldung: 09.02.2005
(73) Patentinhaber: E.G.O. ELEKTRO-GERÄTEBAU GmbH, D-75038 Oberderdingen (DE)
(72) Erfinder: Martin Baier, 76275 Ettlingen (DE)
(74) Vertreter: Patentanwälte Ruff, Wilhelm, Beier, Dauster & Partner

(56) Entgegenhaltungen:
- EP-A- 0 563 698
- EP-A- 1 110 627
- EP-A- 1 303 168
- DE-A1- 10 147 940

## Beschreibung

Die Erfindung betrifft eine Vorrichtung zur Bedienung eines Kochsystems nach dem Oberbegriff des Patentanspruchs 1.

Zur Bedienung von Kochsystemen werden häufig kapazitive oder optische Schaltelemente eingesetzt, die vorzugsweise unter einem Kochfeld, beispielsweise einem Glaskeramikkochfeld, angeordnet sind. Als nachteilig kann dabei angesehen werden, dass durch diese Anordnung der Schaltelemente eine wirksame Strahlungsheizkörpergröße verkleinert wird.

Die gattungsgemäße EP 0 563 698 B1 beschreibt ein automatisches Kochsystem, bei dem ein Kochprozeß mit einer optischen Sensoreinheit überwacht wird, wobei die optische Sensoreinheit beispielsweise als Farbkamera, Infrarot-Kamera oder als Photodiodenfeld ausgeführt ist. Die optische Sensoreinheit überwacht einen Kochbereich und ein Gargut, das im Kochbereich zubereitet wird.

### Aufgabe und Lösung

Die Aufgabe der Erfindung ist es, das gattungsgemäße Kochsystem mit einer Vorrichtung zur Bedienung so weiterzubilden, dass eine sichere Bedienung des Kochsystems möglich ist und der Bedienkomfort erhöht wird.

Die Erfindung löst diese Aufgabe durch eine Vorrichtung zur Bedienung eines Kochsystems mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Der Hauptgedanke der Erfindung besteht darin, zur Bedienung von einem Kochsystem eine optische Sensoreinheit einzusetzen, die so angeordnet ist, dass sie ein Bedienfeld mit mehreren Bedienflächen überwacht. Die Sensoreinheit ist zur Bilderkennung oder Geometrieerkennung ausgebildet. Dabei ist Geometrieerkennung im wesentliche eine einfachere Variante von Bilderkennung, die vor allem auf Symbole oder Darstellungen mit einfachen Geometrien ausgelegt ist. Das Bedienfeld ist vorzugsweise aus einzelnen Bedienflächen aufgebaut oder weist diese auf. Die Bedienflächen sind jeweils einer Funktion, insbesondere einer Kochfunktion, des Kochsystems zugeordnet. So können die Bedienfelder in etwa gebräuchlichen Tasten oder anderen Bedienelementen entsprechen. Die zugeordnete Funktion wird aktiviert, wenn die optische Sensoreinheit erkennt, dass ein Benutzer einen Finger auf oder über eine der Bedienflächen auflegt und diese somit bedient.

Zur bevorzugten Erkennung eines Benutzerfingers nimmt die optische Sensoreinheit fortlaufend oder in gewissen Zeitabständen Bilder vom Bedienfeld auf und wertet ein aktuell aufgenommenes Bild dahingehend aus, ob sich ein Finger eines Benutzers auf dem Bedienfeld befindet. Wird ein Benutzerfinger auf dem Bedienfeld erkannt, dann wird die Position des Fingers auf dem Bedienfeld und eine zugehörige Bedienfläche bestimmt, und anschließend die der bestimmten Bedienfläche zugeordnete Funktion aktiviert.

Die optische Sensoreinheit zur Bilderkennung ist beispielsweise als Farbkamera und/oder Infrarot-Kamera und/oder als Photodiodenfeld ausgeführt. Vorteilhaft weist sie einen CCD-Chip auf, insbesondere als Videokamera. Es sind auch Kombinationen der genannten Ausführungsformen möglich, insbesondere dann, wenn die Sensoreinheit zusätzlich zur Überwachung des Kochbereichs verwendet wird. Auch hier kann eine Bilderkennung oder Geometrieerkennung mit großem Vorteil eingesetzt werden. Es können einzelne Bedienflächen bestimmte Geometrien aufweisen, beispielsweise eine EIN-/AUS-Bedienfläche immer ein Dreieck. So kann die EIN-/AUS-Funktion immer anhand des Dreiecks erkannt werden. Weitere Möglichkeiten sind weitere geometrische Grundformen, beispielsweise Vielecke.

Bei einer vorteilhaften Ausführungsform umfasst die Sensoreinheit eine Auswerteeinheit, welche die Signale der Sensoreinheit auswertet und die erkannte Betätigung einer der Betätigungsflächen an eine Steuereinheit zur Aktivierung der ausgewählten Funktion weitermeldet. Die Auswerteeinheit kann beispielsweise in der Sensoreinheit oder in der Steuereinheit angeordnet sein.

Bei einer besonders vorteilhaften Ausführungsform wird eine Funktion nur ausgelöst, wenn der durch die Sensoreinheit detektierte Finger eine vorgebbare oder vorgegebene Kontur aufweist, wobei die vorgebbare Kontur des Fingers beispielsweise herstellerseitig in der Auswerteeinheit abgespeichert ist. Durch diese Maßnahme kann in vorteilhafter Weise wirksam verhindert werden, dass unbeaufsichtigte Kleinkinder mit kleinen Fingern das Kochsystem aktivieren.

Zusätzlich können in der Auswerteeinheit ein aktuelles Design und/oder eine spezielle Anordnung oder Größe der Bedienflächen des Bedienfeldes abgespeichert sein. Dadurch ist es bei einer Ausgestaltung der Erfindung möglich, dass ein Benutzer eine individuelle Bedienfläche zusammenstellen kann, deren Merkmale anschließend in der Auswerteeinheit abgespeichert werden. Zudem können die verschiedenen Funktionen beliebigen Bedienflächen zugeordnet werden, wodurch der individuelle Charakter des Bedienfeldes noch erhöht werden kann.

Bei einer anderen Ausgestaltung der Erfindung ist es möglich, herstellerseitig eine Anzahl verschieden gestalteter Bedienfelder vorzusehen oder anzubieten. Sie können sich in der Anzahl, Funktion und evtl. in der Gestaltung der einzelnen Bedienflächen unterscheiden. Die Bedienfelder sind erfindungsgemäß bewegbar oder können als Platte oder sogar Bedruckung nach vorgegebenem Design auf einer Arbeitsplatte odgl. befestigt werden. So sind Gestaltung und Anordnung in weiten Bereichen variabel. Die einzelnen Bedienfelder sind vorteilhaft in der Vorrichtung, insbesondere in der Auswerteeinheit oder Sensoreinheit, abgespeichert. So können sie erkannt werden, beispielsweise anhand von speziellen Codierungen oder der individuellen Gestaltung des Bedienfeldes, und die Bedienflächen genau lokalisiert werden. Es kann dann zur Auswertung einer Bedienung analysiert werden, inwiefern an einer Stelle eine bestimmte Bedienfläche sein soll und ob an dieser Stelle eine Bedienung vorliegt.

Um den Kochbereich, beispielsweise ein Glaskeramikkochfeld nicht unnötig zu begrenzen, ist das Bedienfeld vorzugsweise außerhalb des Kochbereiches angeordnet, beispielsweise auf einer bewegbaren Platte oder Unterlage, die zur Bedienung nur in den Detektierbereich der Sensoreinheit gebracht wird. Alternativ ist das Bedienfeld in eine Arbeitsplatte integriert, wobei es beispielsweise in die Arbeitsplatte oder bewegbare Platte eingefräst oder eingraviert oder nur aufgeklebt ist.

Es ist auch möglich, an dem Bedienfeld Mittel zur Erkennung eines Auflegens eines Fingers oder eines Ausübens von Druck vorzusehen. Dadurch kann ein doppeltes Signal für erhöhte Bediensicherheit erzeugt werden. Nur in Abhängigkeit von einem Berühren oder Druck, welcher theoretisch auch an beliebiger Stelle stattfinden kann, kann eine Betätigung als solche erkannt bzw. in eine Funktion umgesetzt werden. Die Erkennungsmittel können ein entsprechendes Signal an die Auswerteeinheit oder die Sensoreinheit geben, beispielsweise als Trigger-Impuls.

Durch Auswertung der Bildinformationen ist es in vorteilhafter Weise möglich, die Sensoreinheit auch zur Kochutensilerkennung, d.h. zur Erkennung ob ein Topf oder eine Pfanne auf dem Kochfeld angeordnet ist und zur Bestimmung der Größe des Kochutensils zu verwenden. Dies ermöglicht beispielsweise eine Erkennung von einer Topferkennung, d.h. wenn die entsprechenden Heizeinrichtungen aktiviert sind ohne dass sich ein Kochutensil auf dem Kochfeld befindet. Es ist auch eine Erkennung von einem Leerkochprozess möglich, d.h. das Gargut im Kochutensil ist vollständig verkocht. Des weiteren ist eine Erkennung von einem Überkochen des Garguts möglich, da sich dann die Kontur des Kochutensils verändert. Zudem kann durch die genaue Größenbestimmung eine optimale Anzahl von erforderlichen Heizelementen zur Beheizung des Kochfeldes bestimmt werden. Außerdem kann die Sensoreinheit zur Dampferkennung und/ oder zur Temperaturbestimmung im Kochbereich und/oder im Kochutensil eingesetzt werden, um Informationen über einen aktuellen Kochprozeß zu gewinnen, wobei bei erkanntem Dampf eine Dunstabzugsvorrichtung aktivierbar ist. Dies ist beispielsweise eine Funktion, die keine direkte Kochfunktion ist, aber durch die erfindungsgemäße Vorrichtung ausgelöst werden kann.

Zur Überwachung des Kochbereichs nimmt die Sensoreinheit, beispielsweise nach der Aktivierung einer Kochfunktion, zusätzlich fortlaufend Bilder vom Kochbereich auf und wertet die aufgenommenen Bilder zur Kochutensilerkennung und/oder zur Dampferkennung und/ oder zur Temperaturbestimmung im Kochbereich und/oder im Kochutensil aus. Bei der Auswertung werden die aktuell aufgenommenen Bildinformationen mit gespeicherten Bildinformationen verglichen, um die entsprechenden Situationen zu erkennen.

Bei einer besonders vorteilhaften Ausführungsform ist die Sensoreinheit oberhalb des Kochbereiches angeordnet und vorzugsweise in die Dunstabzugsvorrichtung integriert.

Bei einer Weiterbildung der Erfindung ist eine Reinigungsvorrichtung für die Sensoreinheit vorhanden, die beispielsweise ständig saubere Luft über die Sensorfläche bläst, um zu verhindern, dass sich Schmutzpartikel auf der Sensorfläche niederschlagen. Alternativ kann ein Verschmutzungsgrad erkannt und ein Benutzer alarmiert werden, beispielsweise durch einen Signalton. So wird er zum manuellen Reinigen aufgefordert.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

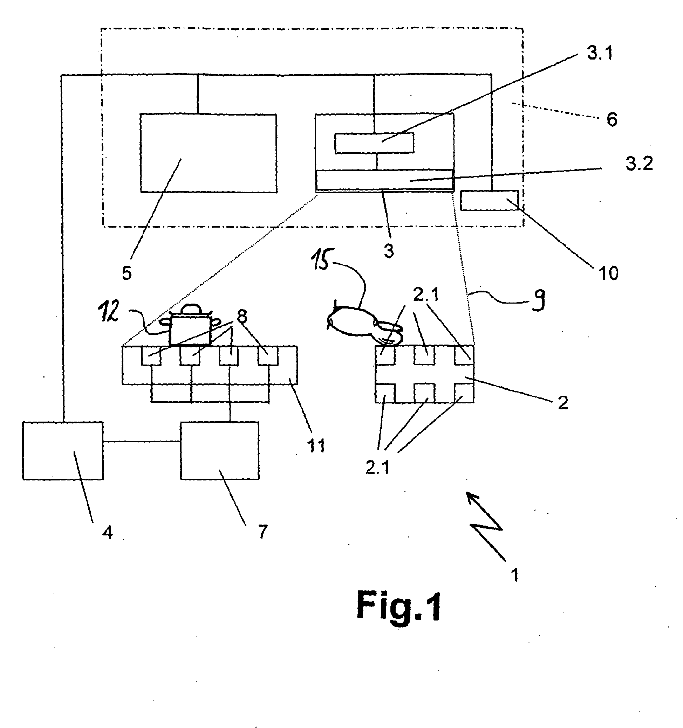

Ein vorteilhaftes, nachfolgend beschriebenes Ausführungsbeispiel der Erfindung ist in der Zeichnung dargestellt. Die einzige Figur zeigt eine schematische Blockdarstellung eines Kochsystems.

### Detaillierte Beschreibung des Ausführungsbeispiels

Wie aus der Figur ersichtlich ist, umfasst das Kochsystem 1 ein Bedienfeld 2 mit mehreren Bedienflächen 2.1, eine optische Sensoreinheit 3 mit einer Sensorfläche 3.2, die einen gestrichelt eingezeichneten Detektionsbereich 9 überwacht. Die Bedienflächen können in abweichender Gestaltung auch dreieckig sein oder andere geometrische Grundformen aufweisen. Die Sensorfläche kann ein CCD-Chip sein. Es ist auch eine in der Sensoreinheit 3 integrierte Auswerteeinheit 3.1 vorgesehen, eine Steuereinheit 4 eine Energieversorgungseinheit 7 für mehrere Heizelemente 8, die in einem Kochfeld 11 angeordnet sind, eine Dunstabzugsvorrichtung 5 und eine Reinigungseinheit 10. Auf dem Kochfeld 11 über einem der Heizelemente 8 ist ein Topf 8 als Kochutensil angeordnet.

Im dargestellten Ausführungsbeispiel ist die Sensoreinheit 3 als Infrarot-Kamera ausgeführt, die das Bedienfeld 2 und das Kochfeld 11 überwacht. Die Sensoreinheit 3, die Dunstabzugsvorrichtung 5 und die Reinigungseinheit 10 sind oberhalb des Kochfeldes 11 in einer gestrichelt dargestellten Dunstabzugshaube 6 angeordnet.

Wenn der Benutzer einen Finger 15 auf eine der Bedienflächen 2.1 legt, erkennt die Sensoreinheit 3 eine Betätigung einer der Bedienflächen 2.1 dadurch, dass mit der Sensorfläche 3.2 ein aktuelles Bild des Bedienfeldes 2 mit dem Finger 15 des Benutzers aufgenommen wird und die Position des Fingers auf dem Bedienfeld 2 durch die Auswerteeinheit 3.1 ausgewertet wird. In der Auswerteeinheit 3.1 ist das vorhandene Bedienfeld 2 mit den Positionen der einzelnen Bedienflächen 2.1 und die mit den Bedienflächen 2.1 jeweils zu aktivierenden Funktionen abgespeichert. Durch die Auswertung der aktuellen Fingerposition auf dem Bedienfeld 2 erkennt die Auswerteeinheit 3.1 welche Funktion der Benutzer aktivieren möchte und gibt diese Information an eine Steuereinheit 4 weiter, die eine Energiequelle entsprechend der vom Benutzer ausgewählten Funktion ansteuert, wodurch beispielsweise mindestens ein Heizelement 8 des Kochfelds 11 mit Energie versorgt wird. Zusätzlich bestimmt die Auswerteeinheit bei der Bildauswertung die Kontur des Fingers 15 und aktiviert die ausgewählte Funktion nur dann, wenn der Finger eine bestimmte Größe hat, um sicherzustellen, dass kein unbeaufsichtigtes Kleinkind das Kochsystem 1 versehentlich aktiviert. Durch diese Maßnahme wird die Sicherheit des Kochsystems 1 in vorteilhafter Weise erhöht.

Wie aus der Figur weiter ersichtlich ist, ist das Bedienfeld 2 außerhalb des Kochbereiches 11 angeordnet und in eine nicht dargestellte Arbeitsplatte eingefräst. Das Design des Bedienfeldes 2 und die Anordnung der Bedienflächen 2.1 auf dem Bedienfeld 2 sind bei dem Kochsystem 1 in vorteilhafter Weise vom Benutzer beim Kauf frei bzw. aus einem Angebot heraus wählbar. Bevorzugt werden fertig verwendbare Bedienfelder 2 angeboten. Es ist nur erforderlich, die entsprechenden Informationen über das Bedienfeld 2 in der Auswerteeinheit 3.1 abzuspeichern. Alternativ kann die Auswerteeinheit 3.1 dazu ausgebildet sein, ein Bedienfeld 2 selbsttätig zu erkennen und sich darauf einzustellen. Dies bedeutet, dass ein Bediener das Bedienfeld 2 seiner Wahl verwenden kann, beispielsweise auch aufrüsten kann für weitere Funktionen. Ebenso kann es möglich sein, dass Bedienfeld für jeden Kochvorgang neu zu platzieren zur Anpassung an bestimmte Platzverhältnisse. Auch dann kann die Erkennung vorteilhaft automatisch erfolgen durch die Sensoreinheit 3 und die Auswerteeinheit 3.1.

Wie oben beschrieben, überwacht die Sensoreinheit 3 neben dem Bedienfeld 2 auch das Kochfeld 11 und kann daher zusätzlich zur Kochutensilerkennung und/oder zur Dampferkennung und/oder zur Temperaturbestimmung im Kochbereich und/oder im Kochutensil eingesetzt werden. Durch Auswertung der Bildinformationen erkennt die Auswerteeinheit 3.1, ob ein Topf oder eine Pfanne auf dem Kochfeld angeordnet ist. Sie kann zusätzlich die Größe des Kochutensils erkennen und dadurch automatisch die entsprechende optimale Anzahl von Heizelementen 8 zur Aufheizung des Kochutensils über die Steuereinheit 4 aktivieren. Um einen Topf oder die Topfgröße auf dem Kochfeld 11 zu erkennen, ist normalerweise eine aufwendige Sensorik notwendig. Im dargestellten Ausführungsbeispiel übernimmt diese Funktion die zur Bedienung ohnehin vorhandene Sensoreinheit 3.

Durch die Bildauswertung ist es zudem möglich den Fortschritt eines Kochprozesses zu bestimmen, sowie eine Topferkennung und gestörte Kochprozesse wie einen Leerkochprozess oder ein Überkochen des Garguts zu erkennen. Der Benutzer kann über eine nicht dargestellte Warneinrichtung alarmiert werden. Bei der beschriebenen Verwendung einer Infrarot-Kamera kann die Sensoreinheit 3 auch zu einer Temperaturbestimmung im Kochbereich und/oder im Kochutensil eingesetzt werden. Wird bei der Bildauswertung Dampf im Kochbereich 11 erkannt, dann aktiviert und steuert die Auswerteeinheit 3.1 die Dunstabzugsvorrichtung 5 entsprechend der erkannten Dampfmenge, um den Dampf aus dem Kochbereich zu entfernen.

Die Reinigungsvorrichtung 10 wird bei einem Kochprozeß von der Auswerteeinheit 3.1 aktiviert und bläst ständig saubere Luft über die Sensorfläche 3.2, um einen Niederschlag von Schmutzpartikeln auf der Sensorfläche 3.2 zu verhindern.

## Patentansprüche

1. Vorrichtung zur Bedienung eines Kochsystems (1) mit einem Kochbereich (11), mit einer optischen Sensoreinheit (3) zur Bilderkennung und einer Bedieneinheit, wobei die Bedieneinheit als Bedienfeld (2) mit mehreren Bedienflächen (2.1) ausgeführt ist, die bei einer Betätigung durch einen Benutzer jeweils eine Funktion des Kochsystems (1) aktivieren, wobei die Sensoreinheit (3) das Bedienfeld (2) überwacht und die Betätigung einer der Bedienflächen (2.1) erkennt, wenn der Benutzer einen Finger (15) auf oder über eine der Bedienflächen (2.1) legt, **dadurch gekennzeichnet, dass** das Bedienfeld (2) außerhalb des Kochbereiches (11) ist und bewegbar ist auf einer Unterlage oder Platte.

2. Vorrichtung nach Anspruch 1, **dadurch gekennzeichnet, dass** die optische Sensoreinheit (3) zur Bilderkennung eine Farbkamera, eine Video-Kamera, oder ein Photodiodenfeld ist.

3. Vorrichtung nach Anspruch 1 oder 2, **gekennzeichnet durch** eine Auswerteeinheit (3.1), welche Signale der Sensoreinheit (3) auswertet und die erkannte Betätigung einer der Bedienflächen (2.1) an eine Steuereinheit (4) zur Aktivierung der ausgewählten Funktion überträgt.

4. Vorrichtung nach einem der vorherigen Ansprüche, **dadurch gekennzeichnet, dass** eine Funktion nur auslösbar ist, wenn der durch die Sensoreinheit (3) detektierte Finger (15) eine vorgegebene Form aufweist.

5. Vorrichtung nach einem der vorherigen Ansprüche, **dadurch gekennzeichnet, dass** eine spezielle Gestaltung und/oder eine Anordnung der Bedienflächen (2.1) des Bedienfeldes (2) und/oder eine Fingerform in der Auswerteeinheit (3.1) abgespeichert sind, wobei vorzugsweise die Auswerteeinheit anhand der Erkennung einzelner charakteristischer Merkmale einer Bedienfläche einen Typ von Bedienfläche aus mehreren Typen genau erkennt.

6. Vorrichtung nach einem der vorherigen Ansprüche, **dadurch gekennzeichnet, dass** jeder Bedienfläche (2.1) oder dem Bedienfeld (2) Erkennungsmittel zugeordnet sind für die Erkennung einer Berührung oder eines Drucks auf das Bedienfeld (2) durch einen Finger (15), wobei vorzugsweise die Erkennungsmittel ein entsprechendes Signal an die Auswerteeinheit (3.1) geben.

7. Vorrichtung nach einem der vorherigen Ansprüche, **dadurch gekennzeichnet, dass** die Sensoreinheit (3) zusätzlich dazu ausgebildet ist, den Kochbereich (11) zu überwachen und zur Erkennung eines Kochutensils (12), zur Dampferkennung oder zur Temperaturbestimmung im Kochbereich (11) und/oder im Kochutensil (12) ausgebildet ist, wobei vorzugsweise bei erkanntem Dampf eine Dunstabzugsvorrichtung (5) aktivierbar ist.

8. Vorrichtung nach einem der vorherigen Ansprüche, **dadurch gekennzeichnet, dass** die Sensoreinheit (3) oberhalb des Kochbereiches (11), vorzugsweise in einer Dunstabzugsvorrichtung (5), angeordnet ist.

9. Vorrichtung nach einem der vorherigen Ansprüche, **gekennzeichnet durch** eine Reinigungsvorrichtung (10) für die Sensoreinheit (3).

## Claims

1. A device for operating a cooking system (1) with a cooking zone (11), with an optical sensor unit (3) for image recognition and a control unit, the control unit taking the form of a control panel (2) with a plurality of control areas (2.1), which each activate one function of the cooking system (1) on actuation by a user, the sensor unit (3) monitoring the control panel (2) and detecting actuation of one of the control areas (2.1) when the user lays a finger (15) on or over one of the control areas (2.1), **characterised in that** the control panel (2) is outside the cooking zone (11) and is movable on a surface or plate.

2. A device according to claim 1, **characterised in that** the optical sensor unit (3) for image recognition is a colour camera, a video camera or a photodiode field.

3. A device according to claim 1 or claim 2, **characterised by** an evaluation unit (3.1), which evaluates signals from the sensor unit (3) and transmits the detected actuation of one of the control areas (2.1) to a controller (4) to activate the selected function.

4. A device according to any one of the preceding claims, **characterised in that** a function can only be triggered when the finger (15) detected by the sensor unit (3) has a predetermined shape.

5. A device according to any one of the preceding claims, **characterised in that** a specific configuration and/or an arrangement of the control areas (2.1) of the control panel (2) and/or a finger shape are stored in the evaluation unit (3.1), the evaluation unit preferably precisely detecting one type of control area from a plurality of types by recognising individual characteristic features of a control area.

6. A device according to any one of the preceding claims, **characterised in that** detection means are assigned to each control area (2.1) or the control panel (2) for detection of contact with or pressure on the control panel (2) by a finger (15), the detection means preferably transmitting a corresponding signal to the evaluation unit (3.1).

7. A device according to any one of the preceding claims, **characterised in that** the sensor unit (3) is additionally configured to monitor the cooking zone (11) and to detect a cooking utensil (12), to detect steam or to determine the temperature in the cooking zone (11) and/or in the cooking utensil (12), an extractor device (5) preferably being activatable if steam is detected.

8. A device according to any one of the preceding claims, **characterised in that** the sensor unit (3) is arranged above the cooking zone (11), preferably in an extractor device (5).

9. A device according to any one of the preceding claims, **characterised by** a cleaning device (10) for the sensor unit (3).

## Revendications

1. Dispositif de commande d'un système de cuisson (1) avec une zone de cuisson (11), une unité de détection optique (3) pour l'analyse d'image et une unité de commande, dans lequel l'unité de commande est formée par un panneau de commande (2) avec plusieurs surfaces de commande (2.1), qui active une fonction du système de cuisson (1) lors d'un actionnement par un utilisateur, sachant que l'unité de détection (3) surveille le panneau de commande (2) et détecte un actionnement d'une des surfaces de commande (2.1) quand l'utilisateur place un doigt (15) sur ou au-dessus d'une des surfaces de commande (2.1), **caractérisé en ce que** le panneau de commande (2) est situé hors de la zone de cuisson (11) et peut être déplacé sur un support ou une plaque.

2. Dispositif selon la revendication 1, **caractérisé en ce que** l'unité de détection optique (3) pour l'analyse d'image est une caméra couleur, une caméra vidéo ou un panneau de photodiodes.

3. Dispositif selon la revendication 1 ou 2, **caractérisé par** une unité d'exploitation (3.1) qui analyse des signaux de l'unité de détection (3) et transmet l'actionnement détecté d'une des surfaces de commande (2.1) à un organe de commande (4) pour activer la fonction sélectionnée.

4. Dispositif selon l'une des revendications précédentes, **caractérisé en ce qu'**une fonction ne peut être déclenchée que quand le doigt (15) détecté par l'unité de détection (3) présente une forme prédéfinie.

5. Dispositif selon l'une des revendications précédentes, **caractérisé en ce qu'**une configuration spéciale et/ou un arrangement des surfaces de commande (2.1) du panneau de commande (2) et/ou une forme de doigt sont enregistrés dans l'unité d'exploitation (3.1), sachant que de préférence l'unité d'exploitation reconnaît avec précision un type de surface de commande parmi plusieurs types par la détection de certaines propriétés caractéristiques d'une surface de commande.

6. Dispositif selon l'une des revendications précédentes, **caractérisé en ce qu'**à chaque surface de commande (2.1) ou au panneau de commande (2) sont associés des moyens de reconnaissance afin de détecter un contact ou une pression sur le panneau de commande (2) par un doigt (15), sachant que de préférence les moyens de reconnaissance envoient un signal correspondant à l'unité d'exploitation (3.1).

7. Dispositif selon l'une des revendications précédentes, **caractérisé en ce que** l'unité de détection (3) est en outre conçue pour surveiller la zone de cuisson (11) et détecter un ustensile de cuisson (12), pour détecter de la vapeur ou pour déterminer la température dans la zone de cuisson (11) et/ou dans l'ustensile de cuisson (12), sachant que de préférence un dispositif d'aspiration de la vapeur (5) peut être activé en cas de détection de vapeur.

8. Dispositif selon l'une des revendications précédentes, **caractérisé en ce que** l'unité de détection (3) est placée au-dessus de la zone de cuisson (11), de préférence dans un dispositif d'aspiration de la vapeur (5).

9. Dispositif selon l'une des revendications précédentes, **caractérisé par** un dispositif de nettoyage (10) pour l'unité de détection (3).
